# EUROPÄISCHE PATENTSCHRIFT

(11) **EP 0 884 144 B1**
(45) Veröffentlichungstag und Bekanntmachung des Hinweises auf die Patenterteilung: **07.04.1999**
(21) Anmeldenummer: 97106621.2
(22) Anmeldetag: 22.04.1997
(51) Int. Cl.: B27F 5/02, B23Q 9/00, B23Q 5/04

(54) **Lamellennutfräswerkzeug**
Biscuit joiner
Outil à tailler des mortaises semi-circulaires

(43) Veröffentlichungstag der Anmeldung: 16.12.1998
(73) Patentinhaber: Lamello AG, 4416 Bubendorf (CH)
(72) Erfinder: Markus, Jäggi, 4450 Sissach (CH)
(74) Vertreter: Kemény AG Patentanwaltbüro

(56) Entgegenhaltungen:
- EP-A- 0 062 253
- AU-A- 599 563
- GB-A- 181 427
- US-A- 4 627 773
- US-A- 4 942 912
- US-A- 4 971 122
- US-A- 5 273 091

## Beschreibung

Die vorliegende Erfindung betrifft ein Lamellennutfräswerkzeug nach dem Oberbegriff von Anspruch 1.

Lamellennutfräswerkzeuge werden für das Erstellen von Nuten, in welche Lamellen als Verbindungselemente zwischen Holzelementen eingesetzt werden, verwendet. Diese Verbindungstechnik ergibt sehr stabile, steife und eine hohe Festigkeit aufweisende Verbindungen.

Ein derartiges Lamellennutfräswerkzeug ist beispielsweise aus der EP 0 420 498 bekannt. Darin wird ein Lamellennutfräswerkzeug beschrieben, welches aus einem Gehäuse mit einem Motor besteht, wobei der Motor ein drehbares Fräsmesser antreibt, welches aus einer Öffnung einer mit dem Gehäuse verbundenen Gleitbaugruppe ausfahrbar und einziehbar ist. Dabei sind die Gleitbaugruppe und das Gehäuse gegeneinander beweglich angeordnet, wodurch das Fräsmesser in der sogenannten Schnittebene bezüglich der Öffnung der Gleitbaugruppe beweglich angeordnet ist. Die Gleitbaugruppe weist nun eine parallel zur Schnittebene ausgerichtete Grundfläche und eine senkrecht dazu ausgerichtet Anschlagsfläche auf, in welcher die genannte Öffnung angeordnet ist. Der Abstand zwischen der Grundfläche und der Schnittebene ist in der Regel nach einem für Nutverbindungen definierten Standardabstand gewählt und nicht veränderbar. Um nun bezüglich einer Kante an einem zu bearbeitenden Werkstück eine Nut in einem anderen Abstand als dem Standardabstand anzufertigen, ist nun weiter an der Anschlagsfläche eine weitere Anschlagsplatte vorgesehen, welche bezüglich der Anschlagsfläche in einem Winkelbereich von 90° verschwenkbar ist, wobei der Abstand der Schwenkachse bezüglich der Schnittebene einstellbar ist. Zur Ausführung dieser Nuten muss allerdings das Gerät verschwenkt gehalten resp. geführt werden.

Der Nachteil bei dieser bekannten Ausführungsart eines derartigen Werkzeuges liegt darin, dass einerseits die Einhaltung der zulässigen Fertigungstoleranz bezüglich des Abstandes zwischen Schnittebene und Grundfläche einen relativ grossen Aufwand bedingt und andererseits für alle vom Standardabstand abweichenden Nutbearbeitungen die Verwendung der verstellbaren Anschlagsfläche notwendig macht, was aufwendig ist und bedingt durch die Konstruktion dieser Anschlagsfläche auch mit grossen Toleranzen, insbesondere bei hohen Stückzahlen von zu bearbeitenden Nuten, verbunden ist. Zudem lässt sich eine einmal gewählte und danach wieder veränderte Einstellung nicht mehr genau reproduzieren.

Die Aufgabe der vorliegenden Erfindung bestand darin, ein Lamellennutfräswerkzeug der geschilderten Art zu finden, welches einfach und schnell auf unterschiedliche Anwendungsbedürfnisse angepasst werden kann.

Die Aufgabe wird erfindungsgemäss durch ein Lamellennutfräswerkzeug mit kennzeichnenden Merkmalen nach Anspruch 1 gelöst.

Bei einem erfindungsgemäss ausgestalteten Lamellennutfräswerkzeug kann der Abstand der Fräsebene zur Auflagefläche verstellt werden. Einerseits kann damit eine Vereinfachung der Herstellung des Lamellennutfräswerkzeuges erzielt werden, indem der innerhalb einer bestimmten Toleranz einzuhaltende Abstand beim fertig hergestellten Gerät durch entsprechendes Positionieren der Antriebswelle im Werk auf einfachste Weise eingestellt werden kann. Damit entfallen die herkömmlich notwendigen Eingriffe in das die Toleranz nicht einhaltende Gerät. Weiter kann damit auch der Benutzer einen je nach Anwendung vorteilhaften anderen Grundabstand als der standardmässig vorgesehene und eingestellte Abstand frei wählen.

Bevorzugte Ausführungsformen der Erfindung ergeben sich aus den Merkmalen der abhängigen Ansprüchen 2 bis 7.

Ein weiterer Vorteil der vorliegenden Erfindung liegt nun darin, dass durch die bevorzugte Ausführungsform mit den rastbaren, diskreten Verstelleinrichtungen verschiedene Einstellungen beliebig oft in hoher Genauigkeit reproduziert werden können. Dies war bei den herkömmlich bekannten Geräten nicht der Fall, bei welchen ausnahmslos die Verstellungen stufenlos erfolgten, und jeweils eine Klemmfixierung eingesetzt worden ist. Dadurch, dass erfindungsgemäss rastbare, d.h. diskrete Positionen einstellbar sind, kann jede gewählte Position immer wieder genau und zuverlässig reproduziert werden. Dies führt nicht zuletzt auch zu einer höheren Präzision bei der Bearbeitung der Werkstücke. Zudem ist eine gewünschte Position auch schneller einstellbar, da die jeweiligen Rastposition genau bezeichnet sind und nicht eine stufenlos verstellbare Markierung mit einer Einstellskala in Uebereinstimmung gebracht werden muss.

Ein Ausführungsbeispiel der vorliegenden Erfindung wird nachstehend anhand von Zeichnungen noch näher erläutert. Es zeigen
Fig. 1 die schematisch Ansicht eines herkömmlichen Lamellennutfräswerkzeuges;
Fig. 2 den Querschnitt durch den Getriebebereich eines erfindungsgemässen Lamellennutfräswerkzeuges;
Fig. 3 die Aufsicht auf eine bevorzugte Ausführungsform eines erfindungsgemässen Lamellennutfräswerkzeuges;
Fig. 4 die Seitenansicht eines Lamellennutfräswerkzeuges nach Fig. 3;
Fig. 5 einen Längsschnitt durch den Kopfbereich des Lamellennutfräswerkzeuges nach Fig. 4; und
Fig. 6 einen Längsschnitt durch den Anschlagschlitten im Bereich einer Säule des Lamellennutfräswerkzeuges nach Fig. 3.

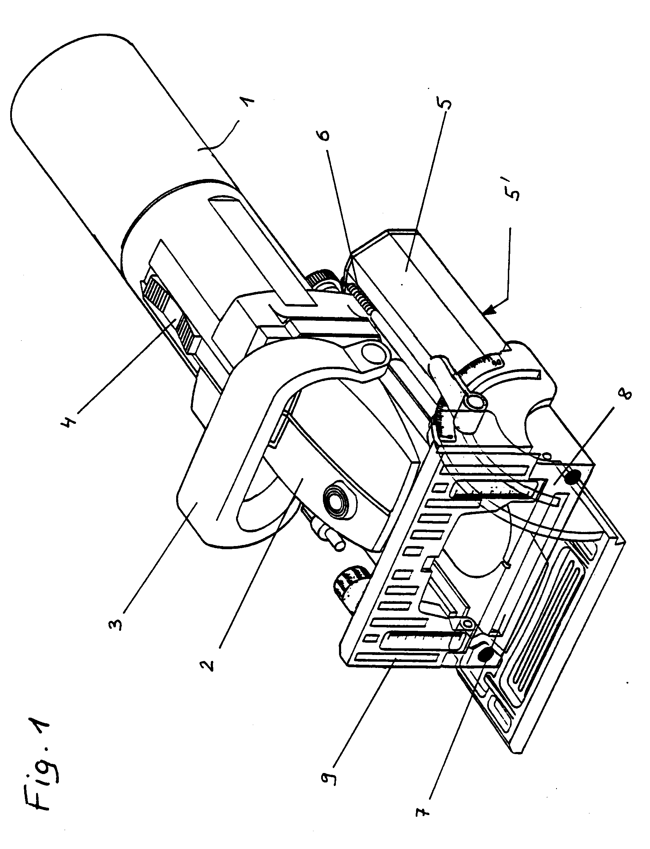

In Figur 1 ist nun die Ansicht eines herkömmlichen elektrisch betriebenen Lamellennutfräswerkzeuges dargestellt. Der Motorteil 1 ist dabei an ein Gehäuse 2 angeflanscht, welches das Getriebe für die Verbindung des Fräsblattes mit dem Motor beinhaltet. Am Gehäuse 2 sind weiter ein Handgriff 3 für die Bedienung des Fräswerkzeuges sowie ein Schalter 4 für das Ein- und Ausschalten des Motors 1 angebracht. Das Gehäuse 2 ist über Führungsflächen mit dem Schlitten 5 verschiebbar verbunden. Eine Rückholvorrichtung, beispielsweise in Form einer Feder 6, bringt dabei das Gehäuse 2 gegenüber dem Schlitten 5 jeweils selbstständig in die in der Figur 1 dargestellte Ruheposition. In dieser Position ist das Fräsblatt vollständig im Innern des Schlittens 5 versenkt und die Fräsöffnung 7 ist frei.

Der Schlitten 5 weist eine ebene Auflagefläche 5' auf, welche parallel zur durch das Fräsblatt gebildeten Fräsebene verläuft. Die Frontfläche 8 des Schlittens 5 ist senkrecht bezüglich der Auflagefläche 5' ebenfalls eben ausgebildet. Eine im Schlitten 5 schwenkbar gelagerte Anschlagsplatte 9 bildet in der dargestellten senkrecht verschwenkten Lage zusammen mit der Frontfläche 8 den Frontanschlag des Fräswerkzeuges.

Das Fräswerkzeug wird nun beispielsweise zur Erstellung einer Lamellennut mit der Auflagefläche 5' auf einen Werktisch aufgelegt und mit dem Frontanschlag gegen ein ebenfalls auf dem Werktisch aufgelegtes Werkstück gedrückt. Sobald der Frontanschlag am Werkstück anliegt wird das Gehäuse entgegen der Federkraft der Rückhaltevorrichtung im Schlitten 5 gegen das Werkstück verschoben, womit das Fräsblatt aus der Fräsöffnung 7 austritt und in das Werkstück eintaucht und damit die gewünschte Nut erstellt.

Eine derartige Nut wird nun im Werkstück immer parallel zur Werktisch- oder Auflagefläche 5' in der durch das Werkzeug definierten Höhe der Fräsebene ausgeführt. Diese Höhe ist für Lamellennutverbindungen standardisiert worden und vorgegeben. Ein Problem bei der Fertigung von solchen Fräswerkzeugen besteht nun darin, dass jeweils die Höhe der Fräsebene bei der Herstellung des Werkzeuges auf Einhalten einer bestimmten Toleranz überprüft werden muss und diese bei zu grosser Abweichung nachgestellt werden muss. Dies erfordert bei den herkömmlichen Werkzeugen einen grossen Aufwand, was sich auch auf die durchschnittlichen Produktionskosten negativ auswirkt.

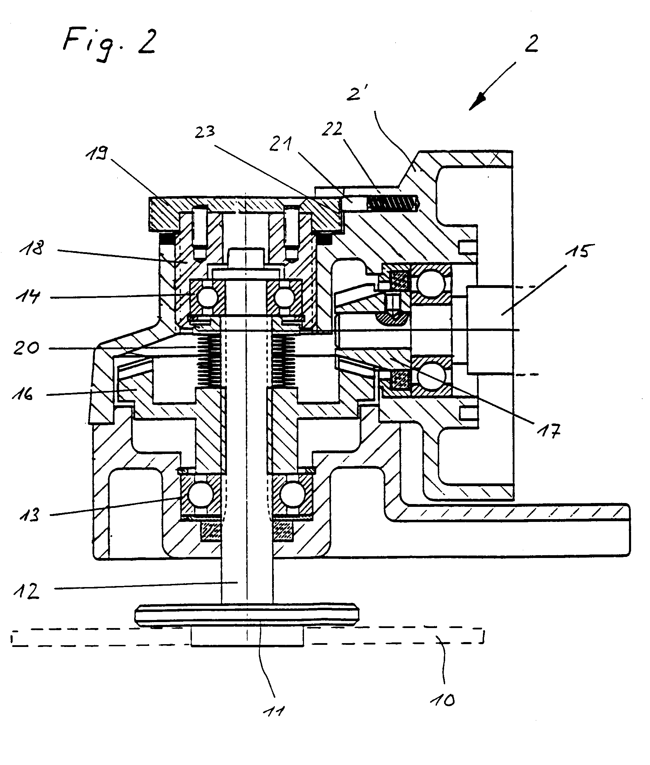

Erfindungsgemäss wird nun vorgeschlagen, die Fräsebenen durch den Bediener am Gerät selbst einstellbar auszuführen, wie aus der Schnittzeichnung von Figur 2 an einem Ausführungsbeispiel näher ersichtlich ist. In diese Figur ist der Schnitt durch das Getriebegehäuse 2' des Gehäuses 2 eines erfindungsgemässen Fräswerkzeuges dargestellt. Der das Fräsmesser 10 aufnehmende Flansch 11 ist am unteren Ende der senkrecht stehenden Antriebswelle 12 angeordnet. Diese Antriebswelle 12 ist beispielsweise mittels zwei Lagern 13,14 drehbar im Getriebegehäuse 2' gelagert. Mit der Motorwelle 15 ist die Antriebswelle 12 über das Tellerrad 16 und das Ritzel 17 verbunden. Um nun das Fräsmesser 10 in der Höhe einstellen zu können, ist das obere Lager 14 der Antriebswelle 12 in einem Positionierkörper 18 angeordnet. Der Positionierkörper 18 ist vorzugsweise mittels eines Gewindes drehbar im Getriebegehäuse 2' angeordnet und weist an seinem oberen Ende ein Stellrad 19 auf, mit welchem der Positionierkörper 18 verdreht werden kann. Durch das Verdrehen des Positionierkörpers 18 wird seine Lage vertikal verschoben und damit auch die Antriebswelle 12, welche unverschiebbar mit dem oberen Lager 14 verbunden ist. Die Antriebswelle 12 ist längsverschiebbar im innere Lagerkäfig des unteren Lagers 13 eingeschoben. Das Tellerrad 16 ist ebenfalls längsverschiebbar auf die Antriebswelle 12 aufgeschoben und weist beispielsweise eine Innenverzahnung auf, welche in Längsnuten der Antriebswelle 12 eingreift und eine formschlüssige verdrehsichere Verbindung herstellt. Zwischen dem Tellerrad 16 und dem oberen Lager 14 ist vorteilhafterweise ein Federelement, beispielsweise aus Tellerfedern 20, angeordnet, welche die beiden Lager 13 und 14 sowie das Tellerrad 16 gegeneinander verspannt. Diese Tellerfedern 20 vermögen die Längenänderung auszugleichen, welche bei der Höhenverstellung der Antriebswelle 12 resp. des Fräsmessers 10 auftritt.

Vorzugsweise weist nun das Stellrad 19 federnde Rastmittel, beispielsweise in Form eines Stiftes 21, auf. Dieser Stift 21 wird durch eine Feder 22 gegen den Rand des Stellrades 19 gedrückt und kann in dort angeordneten, parallel zur Antriebswellenachse verlaufenden Nuten 23 einrücken. Damit werden an den durch diese Nuten 23 definierten Winkelpositionen diskrete Höhenstellpositionen für die Lage des Fräsmessers 10 geschaffen. Der Vorteil dieser diskreten Positionen liegt darin, dass bestimmte Höhenpositionen mit sehr hoher Genauigkeit schnell und einfach wieder reproduziert werden können.

Bei einem solchen erfindungsgemäss ausgestalteten Nutfräswerkzeug kann nun auch einfach die geforderte Grundeinstellung der Höhe der Fräsebene innerhalb der geforderten Toleranzen einfach am fertig produzierten Gerät durch Verdrehen des Positionierkörpers 18 eingestellt werden. Danach kann beispielsweise die Höheneinstellskala am Stellrad 19 in der Nullposition mit der entsprechenden Markierung am Gehäuse 2 resp. 2' ausgerichtet und fixiert werden.

Der Anwender kann aber auch für den Einsatz des Werkzeuges den Abstand der Fräsebene in Bezug auf die Auflagefläche 5' innerhalb der durch die Höhe der Fräsöffnung 7 vorgegebenen Grenzen beliebig einstellen. Diese Einstellungen sind vorteilhafterweise durch die rastenden Positioniermittel 21, 23 jeweils auch wieder genau reproduzierbar.

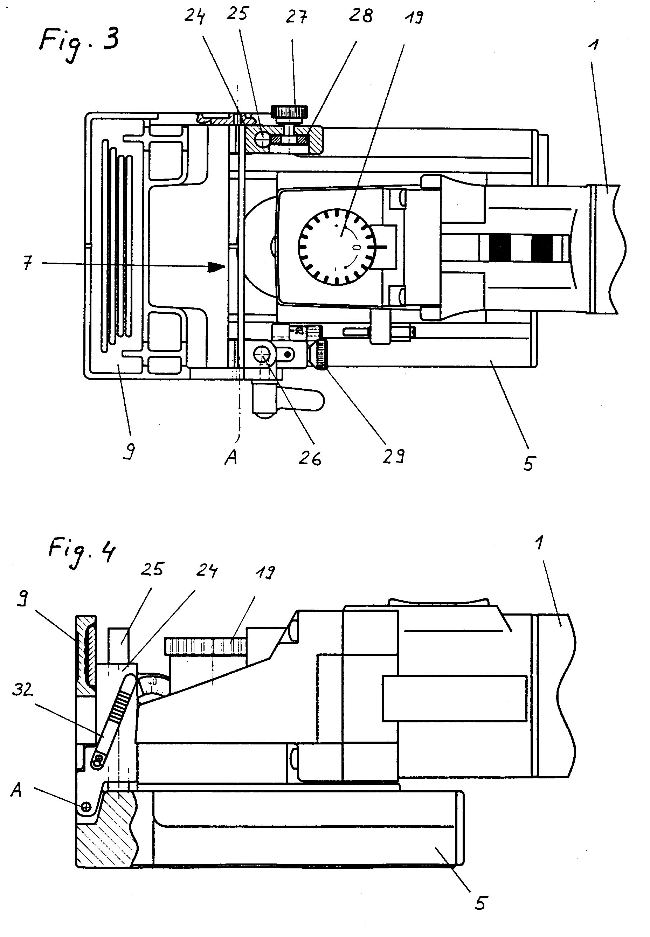

Wenn nun dennoch die Anschlagplatte 9 in einer bestimmten Winkellage und Höhe in Bezug auf den Schlitten 5 eingesetzt werden soll, so ist erfindungsgemäss vorzugsweise vorgesehen, ebenfalls federbehaftete Rastmittel vorzusehen, wie schematisch aus der Aufsicht in Figur 3 hervorgeht. So ist die Anschlagplatte 9 um ihre Achse A schwenkbar in einem Anschlagschlitten 24 gelagert. Dieser Anschlagschlitten 24 ist vertikal verschiebbar in zwei Säulen 25 und 26 gelagert. Diese Säulen 25 und 26 sind parallel zueinander ausgerichtet am Schlitten 5 neben und hinter der Fräsöffnung 7 versetzt angeordnet. Die Säulen 25, 26 weisen dabei jeweils einen zahnstangenartig ausgebildeten Abschnitt auf, in welchen auf einer Seite ein mit einem Stellrad 27 verbundenes Zahnrad 28 eingreift. Mit diesem Stellrad 27 kann durch Eingriff des Zahnrades 28 in die Verzahnung der Säule 25 der Anschlagschlitten 24 vertikal verschoben werden. Auf der anderen Seite greift ein federbehaftetes Stiftelement 29 in die Verzahnung der Säule 26 ein. Die Spitze des Stiftelementes 29 ist derart ausgebildet, dass sie in die Verzahnung der Säule 26 eingreift und diese im Sinne einer federnden Rastung lösbar fixiert. Unter Verwendung einer geeigneten Skala am Stellrad 27 kann nun in bestimmbaren, diskreten Abständen die vertikale Lage des Anschlagschlittens 24 bezüglich des Schlittens 5 reproduzierbar verstellt resp. eingestellt werden. Die dargestellte Anordnung ist in Figur 4 zur Veranschaulichung auch noch in der Seitenansicht dargestellt.

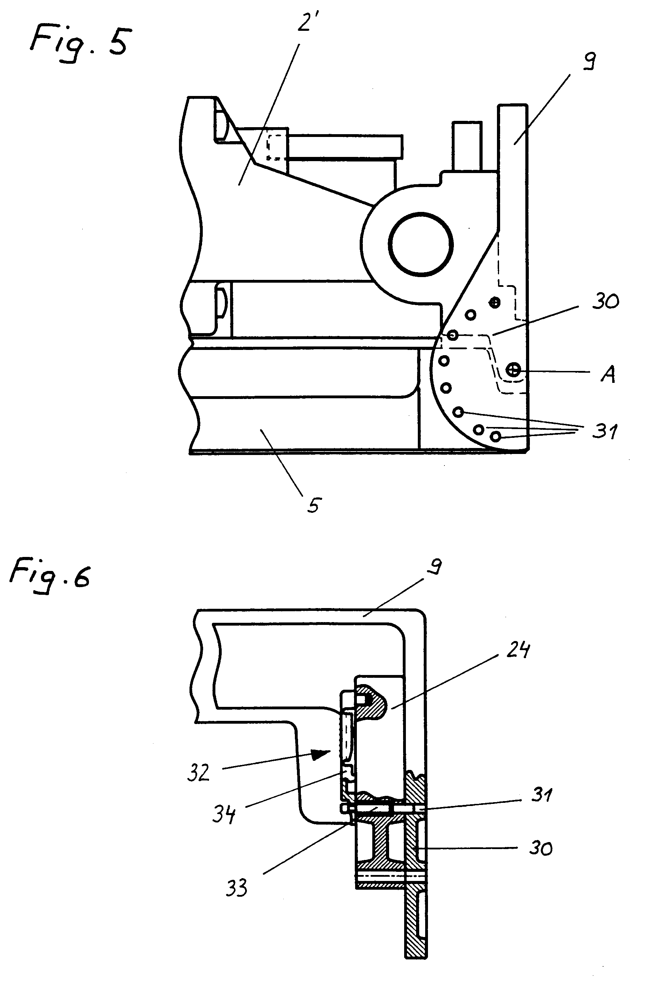

Vorzugsweise wird der Verschwenkwinkel der Anschlagplatte 9 ebenfalls durch federbehaftete Rastmittel 32 in diskreten, reproduzierbaren Schritten einstellbar ausgeführt. Hierfür weist die Anschlagplatte 9 beispielsweise eine halbkreisförmige Rippe 30 auf, welche in einem Radius um die Drehachse A herum in bestimmbaren Abständen Rastpunkte 31, d.h. beispielsweise Bohrungen, aufweist, wie aus dem Schnittbild in Figur 5 ersichtlich ist. In diese Rastpunkte 31 kann analog zur vorgehend beschriebenen Weise ein federbehafteter Stift 33 des Rastmittels 32 lösbar einrasten, um eine diskrete Winkelposition der Anschlagplatte 9 reproduzierbar festzulegen. Beispielsweise kann das Rastmittel 33 einen aus einem biegbaren, federnden Kunststoff gefertigten Betätigungshebel 34 aufweisen, mit welchem der Stift 33 gegen die Federkraft aus dem Eingriff im Rastpunkt 31 herausgezogen werden kann, wie aus Figur 6 ersichtlich ist.

## Patentansprüche

1. Lamellennutfräswerkzeug welches ein Gehäuse (2) mit einem Motor (1), ein über ein Getriebe mit dem Motor (1) gekuppeltes Fräsmesser (10), einen gegenüber dem Gehäuse (2) längsverschiebbaren Schlitten (5) mit einer Öffnung (7) zum Austritt des Fräsmessers (10) und einer ebenen Auflagefläche (5'), sowie in Bezug auf den Abstand und den Winkel zur durch das Fräsmesser (10) gebildeten Fräsebene einstellbaren Anschlagsplatte (9) aufweist, dadurch gekennzeichnet, dass das Fräsmesser (10) an einer in Bezug auf die Auflagefläche (5') entlang ihrer Achse im wesentlichen senkrecht gegenüber dem Gehäuse (2) verschiebbar ausgebildeten Antriebswelle (12) angeordnet ist.

2. Lamellennutfräswerkzeug nach Anspruch 1, dadurch gekennzeichnet, dass die Antriebswelle (12) in der Nabe eines Tellerrades (16), welches über mindestens ein weiters Zahnrad (17) mit der Motorwelle (15) verbunden ist, längsverschiebbar und verdrehsicher gelagert ist.

3. Lamellennutfräswerkzeug nach Anspruch 1 oder 2, dadurch gekennzeichnet, dass am vom Fräsmesser (10) gegenüberliegenden Ende der Antriebswelle (12) ein Positionierkörper (18,19) drehbar gelagert angeordnet ist, welcher in der Achsrichtung der Antriebswelle (12) höhenverstellbar mit dem Gehäuse (2;2') verbunden ist, vorzugsweise über ein Gewinde.

4. Lamellennutfräswerkzeug nach Anspruch 3, dadurch gekennzeichnet, dass der Positionierkörper (18) federbetätigte Rastmittel (21,22) aufweist, welche mit dem Gehäuse (2;2') derart zusammenwirken, dass der Positionierkörper (18) in bestimmten Verdrehpositionen relativ zum Gehäuse (2;2') lösbar fixiert ist.

5. Lamellennutfräswerkzeug nach Anspruch 4, dadurch gekennzeichnet, dass das Rastmittel durch einen in einer radial zum Positionierkörper (18) angeordneten Bohrung des Gehäuses (2;2') federnd gelagerten Stiftes (21) gebildet ist, welcher in entsprechend angeordneten Nuten (23) des Positionierkörpers (18,19) in Eingriff bringbar ist.

6. Lamellennutfräswerkzeug nach einem der Ansprüche 1 bis 5, dadurch gekennzeichnet, dass die Anschlagsplatte (9) an einem Anschlagsschlitten (24) schwenkbar angeordnet ist, welcher durch zwei parallel angeordnete und senkrecht zur Fräsebene verlaufende Säulen (25,26), welche hinter der Austrittsöffnung (7) des Fräsmessers (10) mit dem Schlitten (5) verbunden sind, vertikal verschiebbar geführt ist, wobei eine Säule (24) eine Verzahnung aufweist, in welche ein mit einem weiteren Stellrad (27) verbundenes Zahnrad (28) eingreift, und die andere Säule (26) Vertiefungen oder ebenfalls eine Verzahnung aufweist, in welche ein am Anschlagsschlitten (24) angeordnetes, federbehaftetes Rastmittel einrastbar ist.

7. Lamellennutfräswerkzeug nach einem der Ansprüche 1 bis 6, dadurch gekennzeichnet, dass die Anschlagsplatte (9) an einem vertikal in Bezug auf die Fräsebene verschiebbaren Anschlagsschlitten (24) um mehr als 90° schwenkbar um eine Schwenkachse (A) angeordnet ist.

8. Lamellennutfräswerkzeug nach Anspruch 7, dadurch gekennzeichnet, dass die Anschlagplatte (9) wenigstens eine senkrecht zur Anschlagfläche ausgerichtete Rippe (30) aufweist, an welcher auf einem Radius um die Schwenkachse (A) angeordnete Vertiefungen (31) angebracht sind, und dass am Anschlagschlitten (24) ein in diese Vertiefungen einrastbares Rastelement (32) vorhanden ist.

## Claims

1. Biscuit jointer which has a housing (2) with a motor (1), a cutter blade (10) coupled by way of a gear to the motor (1), a slide (5) which is longitudinally movable relative to the housing (2) and has an opening (7) for the cutter blade (10) to come out, and a planar bearing surface (5'), as well as a stop plate (9) which is adjustable with respect to spacing and angle relative to the cutting plane formed by the cutter blade (10), characterised in that the cutter blade (10) is disposed on a drive shaft (12) which is movable with respect to the bearing surface (5') along its axis substantially perpendicular to the housing (2).

2. Biscuit jointer as claimed in Claim 1, characterised in that the drive shaft (12) is mounted so as to be longitudinally movable and secured against rotation in the hub of a ring gear (16) which is connected by at least one further toothed wheel (17) to the motor shaft (15).

3. Biscuit jointer as claimed in Claim 1 or 2, characterised in that on the opposite end of the drive shaft (12) to the cutter blade (10) a positioning body (18, 19) is rotatably mounted which is connected to the housing (2; 2') so as to be adjustable in height in the axial direction of the drive shaft (12), preferably by way of a screw thread.

4. Biscuit jointer as claimed in Claim 3, characterised in that the positioning body (18) as spring-actuated locking means (21, 22) which cooperate with the housing (2; 2') in such a way that the positioning body (18) is releasably fixed in certain rotated positions relative to the housing (2; 2').

5. Biscuit jointer as claimed in Claim 4, characterised in that the locking means are formed by a pin (21) which is resiliently mounted in a bore in the housing (2; 2') disposed radially with respect to the positioning body and which can be brought into engagement in correspondingly disposed grooves (23) in the positioning body (18, 19).

6. Biscuit jointer as claimed in one of Claims 1 to 5, characterised in that the stop plate (9) is pivotably disposed on a stop slide (24) which is guided so as to be vertically movable by two parallel columns (25, 26) which extend perpendicular to the cutting plane and are connected to the slide (5) behind the opening (7) for the cutter blade (10) to come out, wherein one column (24) has a toothing in which a thoothed wheel (28) connected to a further set wheel (27) engages, and the other column (26) has indentations or likewise a toothing in which a spring-loaded locking means disposed on the stop slide (24) can engage.

7. Biscuit jointer as claimed in one of Claims 1 to 6, characterised in that the stop plate (9) is disposed so as to be pivotable by more than 90° about a pivot axis (A) on a stop slide (24) which is vertically movable with respect to the cutting plane.

8. Biscuit jointer as claimed in Claim 7, characterised in that the stop plate (9) has at least one rib (30) which is aligned perpendicular to the stop surface and on which indentations (31) are provided at a radius about the pivot axis (A), and that a locking element (32) which can engage in these indentations is provided on the stop slide (24).

## Revendications

1. Outil de fraisage de rainures pour recevoir des lamelles d'assemblage comprenant un boîtier (2) avec un moteur (1), un couteau de fraise (10) couplé au moteur (1) par une transmission, un chariot (5) coulissant longitudinalement par rapport au boîtier (2) et ayant une ouverture (7) pour la sortie du couteau de fraise (10) ainsi qu'une surface d'appui plane (5') et une plaque de butée (9), réglable en distance et en angle par rapport au plan de fraisage formé par le couteau de fraise (10),
caractérisé en ce que
le couteau de fraise (10) est monté sur un axe d'entraînement (12) susceptible de coulisser par rapport à la surface d'appui (5') le long de son axe, essentiellement perpendiculairement par rapport au boîtier (2).

2. Outil selon la revendication 1,
caractérisé en ce que
l'axe d'entraînement (12) est monté de manière bloquée longitudinalement et en rotation dans le moyeu d'une roue de coupelle (16) reliée à l'axe (15) du moteur par au moins une autre roue dentée (17).

3. Outil selon la revendication 1 ou 2,
caractérisé en ce que
l'extrémité de l'axe d'entraînement (12) opposée au couteau de fraise (10) comporte monté à rotation, un organe de positionnement (18, 19) relié de façon réglable en hauteur avec le boîtier (2, 2') dans la direction axiale de l'axe d'entraînement (12) de préférence par un filetage.

4. Outil selon Ta revendication 3,
caractérisé en ce que
l'organe de positionnement (18) comporte des moyens d'encliquetage (21, 22) chargés par ressort et coopérant avec le boîtier (2, 2') de façon que l'organe de positionnement (18) soit fixé de manière amovible dans certaines positions de rotation par rapport au boîtier (2, 2').

5. Outil selon la revendication 4,
caractérisé en ce que
le moyen d'accrochage est formé par une broche (21) montée élastiquement dans un perçage du boîtier (2, 2'), dirigée radialement par rapport à T'organe de positionnement (18), cette broche venant en prise dans des rainures correspondantes (23) de l'organe de positionnement (18, 19).

6. Outil selon T'une quelconque des revendications 1 à 5, caractérisé en ce que
la plaque de butée (9) est montée pivotante sur un chariot de butée (24) ce dernier étant monté sur deux colonnes (25, 26) parallèles, perpendiculaires au plan de fraisage, et reliées derrière l'orifice de sortie (7) du couteau de fraise (10) au chariot (5), pour Te guidage coulissant verticalement, une colonne (24) comportant une denture dans laquelle pénètre une roue dentée (28) reliée à une autre roue de réglage (27) et l'autre colonne (26) comporte des cavités ou également une denture dans laquelle s'accroche un moyen d'accrochage chargé par ressort et porté par le chariot de butée (24).

7. Outil selon l'une des revendications 1 à 6,
caractérisé en ce que
la plaque de butée (9) est montée sur un chariot de butée (24) coulissant verticalement par rapport au plan de fraise, et qui peut pivoter de plus de 90° autour d'un axe de pivotement (A).

8. Outil selon la revendication 7,
caractérisé en ce que
la plaque de butée (9) comporte au moins une nervure (30) perpendiculaire à la surface de butée et munie de cavités (31) prévues sur un rayon autour de l'axe de pivotement (A), et Te chariot de butée (24) est muni d'un élément d'accrochage (32) susceptible de s'accrocher dans ces cavités.
